# EUROPEAN PATENT APPLICATION

(11) **EP 4 725 920 A1**
(43) Date of publication of application: **15.04.2026**
(21) Application number: 24205367.6
(22) Date of filing: 08.10.2024
(51) Int. Cl.: C03B 11/08

(54) **DEVICE AND METHOD FOR MANUFACTURING OF LENSES**

(71) Applicant: Fisba AG, 9016 St. Gallen (CH)
(72) Inventor: Kunz, Andreas, 9230 Flawil (CH)
(74) Representative: Hepp Wenger Ryffel AG

(57) **Abstract**

The invention concerns a tool (100) for manufacturing micro lenses by pressing a cavity in a preform (10), preferably a plate/wafer, more preferably a preform of glass, a method for manufacturing of micro lenses, a replacement kit and a method for refitting a tool for manufacturing micro lenses.

The tool (100) comprises at least a first tool part (110) with a pressing body (1), preferably a pressing plate. The first tool part (110) comprises at least one pressing element, in particular at least one pressing sphere (2), preferably a plurality of pressing spheres (2), being in contact with the pressing body (1). The first tool part (100) further comprises a compensation plate (3) with at least one opening (4), preferably one opening (4) for each pressing element (2), wherein a portion (5), preferably less than a half, of the pressing element (2) is disposed to extend from the compensation plate (3) and from the pressing body (1).

## Description

The invention concerns a tool for manufacturing micro lenses, a method for manufacturing of micro lenses, a replacement kit and a method for refitting a tool for manufacturing micro lenses.

High precision lenses made of glass are needed in many fields. A large number of small lenses with diameters of 1 to 5 mm are for example used in endoscopy, optical communication or smart phone cameras today.

A glass plate or wafer may be pressed with a pressing tool around the softening temperature of the glass to form a field of lenses which subsequently are singularized. The pressing tool may be provided by a polished ceramic or metallic mold.

The manufacturing and maintenance of the pressing tool is relevant since the quality of the lenses depends on the quality of the pressing tool.

To enable exchange of single forming tools, it is known to provide a pressing tool comprising a pressing body with separate forming tools.

US 11608288 B2 discloses a method comprising pressing a preform with a mold comprising a mold body and a plurality of mold protrusions extending from the mold body to transform the preform from a glass material into a shaped article comprising a plurality of cavities corresponding to the plurality of mold protrusions. The mold body comprises a porous material. The plurality of mold protrusions comprise a non-porous material.

US2003/0025227 A1 discloses a relief master formed by assembly of previously molded, machined, or otherwise fabricated relief structures. The relief master is assembled through selective application and positioning of the small-scale relief structures, and can then be used as a pattern for diverse surface replication processes, such as embossing or compression molding of complex patterned surfaces.

Mold protrusions or relief structures have to be mounted in or on a mold body or substrate that includes a plurality of positioning features complementary to the positioning features in the relief structures. Thus, not only the pressing face of the relief structures but also the opposing position faces have to be formed very carefully, which might be cost intensive. Additionally, the pressing surface often needs to be treated with a noble metal coating or diamond like carbon coating to achieve the optical surface quality of the glass to be pressed.

The thermal forming of thin glass preforms is demanding. For ideal shaping or because demoulding is not possible, there are applications where the tool and the formed glass must also be in contact during the cooling process. Because of the significantly different thermal expansions of the pressing tool and the glass to be formed, stresses arise on the relief structures as both cool down together which may cause wafer breakage or demoulding problems. These tensions can compromise the application of the lenses or lead to problems in post-processing.

From an economic perspective, it is most efficient to press as many cavities as possible onto a large diameter wafer. Unfortunately, the problems caused by shrinkage increase with the diameter of the disk and the number of cavities.

It is an object of the present invention to prevent the drawbacks of the prior art and to provide a tool for manufacturing a micro lens, a method for manufacturing a system of micro lens, a replacement kit and a method for refitting a tool for manufacturing micro lenses, allowing to produce lenses with a high optical quality and reduced manufacturing costs.

The object is achieved by the tool, the methods and the replacement kit of the independent claims.

A tool for manufacturing a micro lens by pressing a cavity in a preform comprises at least a first tool part with a pressing body, at least one pressing element, preferably a plurality of pressing elements, and a compensation plate.

A pressing sphere might be a preferable form of a pressing element to mould spherical lens surfaces. However, the pressing element may comprise a stamp side tending towards the preform and a, for example differently formed, opposite backside tending towards the pressing body. A pressing element formed by a pressing cylinder, in particular with a circular diameter, with for example a hemispherical end, might also be used to mould spherical surfaces. Based on this structure, a pressing element having an aspherical pressing surface or a pressing element having a free form surface can also be considered as further embodiments of this invention. Yet another version of the cylindrical pressing element can also be non-rotationally symmetrical and have a rectangular, polygonal or free-form cross-section.

The pressing element, in particular the pressing sphere, may have a largest diameter in a range of 0.2 to 15mm.

The pressing body preferably is a pressing plate with at least one flat surface. In another embodiment, the pressing plate may be equipped with mounting structures to keep the pressing elements in place. The mounting structures may for example comprise openings having a diameter corresponding to the diameter of the backside of the pressing element.

The pressing body mainly serves for transferring load and/or heat from a lens manufacturing machine, preferably a glass moulding machine, where the pressing tool may be mounted to. The pressing machine provides for a relative movement of the pressing body and the preform, for example for moving the pressing body towards the preform.

The pressing body may be made of hard metals based on tungsten carbide (WC) or silicon carbide (SiC) powders. However, since there is no direct contact with the molten glass, alternative materials such as metal alloys might be used. Preferably, the pressing body, in particular the pressing plate that is in contact with the pressing elements, is made of the same material as the compensation plate.

The compensation plate comprises at least one opening, preferably one opening for each pressing element, wherein a portion, preferably less than a half, of the pressing element is disposed to extend from the compensation plate towards the preform.

The opening may have a diameter in at least one direction which is smaller than the largest diameter of the pressing element, in particular the largest diameter of a pressing sphere.

The at least one pressing element, in particular the pressing sphere, preferably is in contact with a respective opening.

The at least one opening preferably has a circular shape, wherein the diameter of the opening is smaller than the largest diameter of the pressing element, in particular the pressing sphere.

Typically, the relation of the opening diameter in the compensation plate and the largest diameter of pressing element, in particular a pressing sphere, is less than 1 and larger 0.5, preferably larger 0.9.

The biggest part of the volume pressing element may be arranged between the pressing body and the compensation plate. A horizontal position of the pressing element along the pressing body is provided by the opening surrounding the pressing element. A vertical movement of the pressing element, in particular the pressing sphere, relative to the pressing body may be prevented because the pressing element, in particular the pressing sphere, is pressed against the pressing body by the compensation plate due to the nearest possible distance between the pressing body and the compensation plate.

The at least one pressing element is in contact with the pressing body, preferably with a flat surface of the pressing plate. Preferable, the pressing element touches the pressing body but is not permanently fixed to it. In case of a different thermal shrinkage of the compensation plate and pressing body, e.g. a pressing plate, the pressing element may be allowed to move horizontally, and in particular relatively to the pressing body.

The preform particularly is a plate, in particular a wafer. Preferably the preform is made of glass, more preferably an optical glass.

The first tool part may comprise at least two pressing elements, in particular the pressing spheres, and the compensation plate may comprise one opening for each pressing element, in particular the pressing sphere.

Preferably, the openings in the compensation plate and accordingly pressing elements are arranged with a distance to each other for allowing thermal moulding of individual concavities without being influenced by each other.

The distance between adjacent pressing elements and/or between adjacent openings preferably is at least one opening diameter.

A plurality of openings in the compensation plate and accordingly a plurality of pressing elements may be arranged in a regular pattern, for example in a hexagonal arrangement, preferably around the centre of the plate, or in a two-dimensional rectangular grid, which allows easy separating in a subsequent step.

Alternatively, the opening may be positioned along concentric circles around the centre of the plate.

Preferably, all pressing elements have the same largest diameter.

The compensation plate may have a thermal expansion coefficient that corresponds to the thermal expansion coefficient of glass, in particular optical glass, around its yielding point, and therefore to the thermal expansion coefficient of the preform material around its yielding point.

The compensation plate may have a thermal expansion coefficient of below 55×10⁻⁶/K.

The compensation plate preferably is made of a metal or a metal alloy having a thermal expansion coefficient between 5×10⁻⁶/K and 25×10⁻⁶/K, preferably 15×10⁻⁶/K and 20×10⁻⁶/K.

The thickness of the compensation plate depends on the size of the pressing elements and may be between 0.2 and 8 mm.

The thermal expansion or shrinkage of the compensation plate preferably corresponds to the thermal expansion or shrinkage of the preform. Hence during forming and subsequent cooling there are no major tensions, in particular in horizontal direction, between the pressing tool and the preform, which might affect the quality of the formed surface.

The pressing element may be made of a material that does not require protective coating such as glassy carbon.

Glassy carbons have a high thermal stability and a high thermal conductivity, while they are hard, resistant to chemical attacks, and impermeable to gases and liquids. As for example disclosed in US3844755A, glasslike carbon can be polished to a glassy finish to which softened glass will not permanently adhere. In addition, the replication of such a surface by the glass has been found to leave the glass with a high surface quality.

The first tool part may comprise a fastener, by which the compensation plate may be fixed to the pressing body, such as a clamp on the outer edge of both parts, or one or more bolts through both parts fixed by a nut at the opposite end. The fastener, such as clamping or screwing device, may comprise a compensation element to reduce thermal stress during heating and cooling cycles, typically a spring element such as a leaf spring or a compressible compensator.

When the compensation plate is attached to the pressing body, the pressing elements may be held in place between the compensation plate and the pressing body.

The holes in the compensation plate may position the spheres horizontally in the plane of the compensation plate. By clamping them between the two plates, the pressing elements, in particular the pressing spheres, are also fixed vertically.

The pressing elements do not have to be fixed to the pressing body as they are positioned by the compensation plate. However, when assembling the tool, it can be advantageous to provide recesses in the pressing body to accommodate the pressing elements to prevent them from moving.

The compensation plate may be coated. The coating may prevent an interference with the preform, in case the compensation plate touches the preform.

The tool may comprise a second tool part, for example a base plate. The second tool part may be arranged opposite to the first tool part. For manufacturing, the preform is placed between the first and the second tool part. By means of an actuator, for example of a lens manufacturing machine, the first and the second tool part may be moved together such that at least the surface of the preform tending toward the first tool part is formed.

Alternatively, the second tool part may be similar to the first tool part and may comprise a second pressing body, at least one second pressing element and a second pressing plate. By such a tool, both surfaces of the preform can be formed in one step.

The tool for manufacturing a micro lens may comprise a fixing device for removably fixing the tool to a lens manufacturing machine, preferably a glass molding machine, preferably to an actuator of the lens manufacturing machine.

A lens manufacturing machine comprises a tool as described above and an actuator, preferably for moving at least one of a first and a second tool part, in particular relative to a preform. The actuator may be adapted to move the first tool part with respect to a second tool part or the first and the second tool part with respect to each other.

Typically, a conventional glass molding machine essentially comprises two opposing punches that are moved together in a force-controlled manner to form a glass prefrom positioned between them at a given temperature, as described in US2410616A for example.

Preferably, the lens manufacturing machine according to the invention, may comprise an actuator for moving at least the first tool part including the pressing body, and in particular the pressing element and the compensation plate, towards the preform.

Alternatively, the lens manufacturing machine may provide for moving the preform towards the first and/or the second tool part of the tool.

The actuator may comprise at least one punch for accommodating a first and/or second tool part and/or the preform.

In a further embodiment of the lens manufacturing machine a first tool part of the tool may be placeable on an upper punch of the lens manufacturing machine and/or a second tool part may be placeable on a lower punch of the lens manufacturing machine.

In cases where both tool parts comprise pressing elements, biconcave, concave-convex or bi-convex lenses may be produced.

The pressing force in the lens manufacturing machine applied to the first and/or second tool part and/or to the preform might be introduced by a cylinder actuated by air or oil. The pressing force may also be created and controlled by a servo motor.

The lens manufacturing machine may comprise a heating device.

The heating device for heating the tool and the preform may comprise a supply for hot gas, an electric resistance heating or infrared lamps.

To remove the heat from the formed glass, resistance heating at lower temperatures can be applied and/or gas and water cooling may be used.

The lens manufacturing machine may comprise cooling channels and/or a fan.

A method for manufacturing a micro lens comprises the step of forming a cavity in a preform of glass, preferably with a tool as described above.

At least one pressing element, each extending from a pressing body through a respective opening of a compensation plate, is pressed against the preform, preferably a heated preform, by the pressing body. Alternatively, the preform may be pressed to the at least one pressing element.

The pressing body may be moved relative to preform to press the pressing element into the preform. Alternatively, the preform may be moved relatively to the at least one pressing element.

The compensation plate preferably is arranged parallel to the pressing body, preferably parallel to a flat surface of a pressing plate.

The pressing element, in particular the pressing sphere, may be held tightly between the compensation plate and the pressing body. The pressing surface is formed by a part of the pressing element extending from the opening in direction to the preform.

The pressing pressure may be in range from 0.1 N/cm2 to 400 N/cm2.

The pressing temperature may be in a range from 200°C to 700°C. The pressing temperature is the temperature of the preform during pressing.

The pressing time may be in range from 30 seconds to 30 minutes. The pressing time is the time for which pressure is applied to the preform.

Subsequently at least one single lens is singularized from the preform. The single lens may be separated by cutting, in particular by laser cutting or wafer sawing.

A replacement kit for a tool for manufacturing a micro lens as described above comprises at least one pressing element, preferably a plurality of pressing spheres, and/or at least one compensation plate.

In case a pressing element of a tool for manufacturing a micro lens as described above is broken or has a damaged surface, such that it is not suitable to form a lens surface with a sufficient quality, the respective pressing element may be replaced by a new one.

In case a different pressing pattern, recesses in the preform of a different diameter or a different curvature are required, the pressing elements and/or the compensation plate may be replaced by pressing elements with a different diameter and/or a compensation plate with opening having a different diameter, a different distance and/or arranged in different pattern.

If the compensation plate of a tool for manufacturing a micro lens as described above has not the required thermal expansion coefficient or is worn out, it may be replaced by a new and/or suitable compensation plate.

A method for refitting a tool for manufacturing micro lenses as described above comprises the steps of removing the compensation plate, preferably replacing at least one pressing element by a pressing element, of a replacement kit, preferably exchanging the compensation plate by a compensation plate of the replacement kit and fixing the compensation plate.

Worn out or broken elements of a tool for manufacturing micro lenses can easily and quickly be replaced, and the ability of the tool for manufacturing high-quality lens may be restored.

In the following, the invention is further explained in embodiments by means of figures, wherein functionally similar parts have the same reference number.
- Figure 1: schematically shows a first example for a tool;
- Figure 2: schematically shows a formed preform;
- Figures 3a, 3b: schematically show two examples of fasteners;
- Figure 4: schematically shows a second example for a tool;
- Figure 5: schematically shows a second example for a tool using cylindrical pressing elements producing convex free-form lenses.

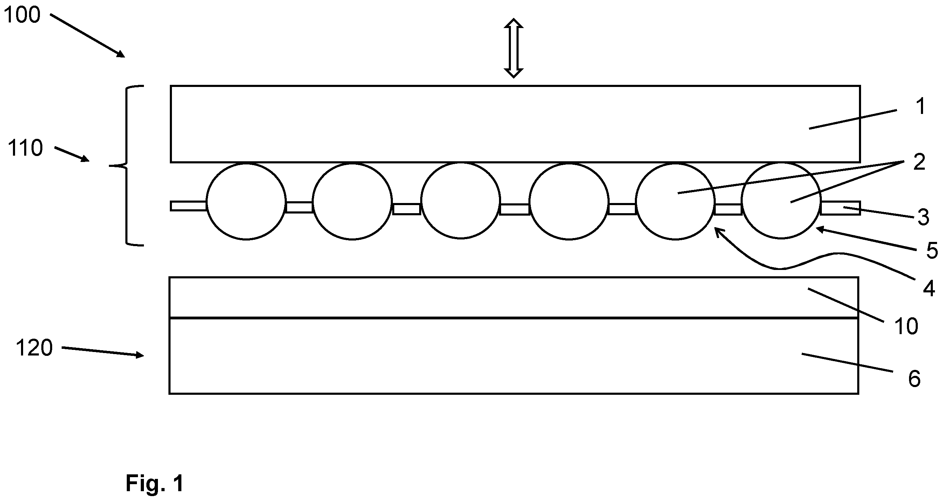

Figure 1 shows a first example for a tool 100 for manufacturing a micro lens.

The tool 100 comprises a first tool part 110 with a pressing body 1, in this case a pressing plate.

The first tool part tool 110 comprises a plurality of pressing spheres 2 as pressing elements, being in contact with the pressing body 1.

The first tool part 110 further comprises a compensation plate 3 comprising one opening 4 for each pressing sphere 2.

A portion 5 of less than a half of the pressing sphere 2 is disposed to extend from the compensation plate 3 and from the pressing body 1.

The tool 100 further comprises a second tool part 110, in this case a base plate 6.

By moving the first tool part 110 towards the second tool part 120, cavities may be formed in a preform 10, preferably a plate/wafer, which is placed between the first tool part 110 and the base plate 6.

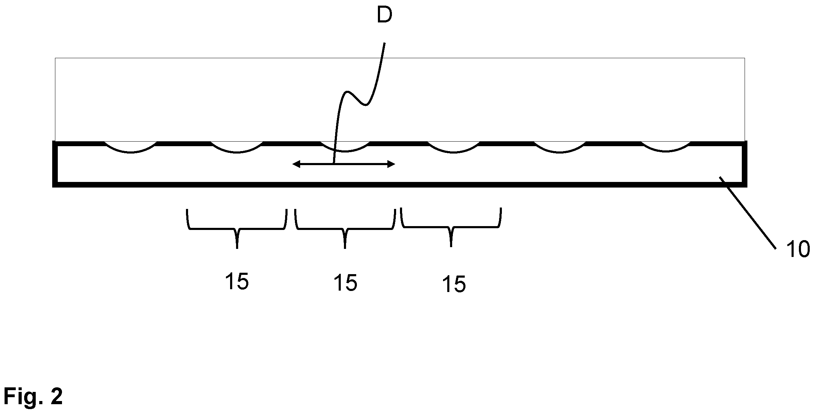

Figure 2 schematically shows a formed preform 10. Individual micro lenses 15, having a diameter D of 1-5mm, may be separated from the formed preform 10.

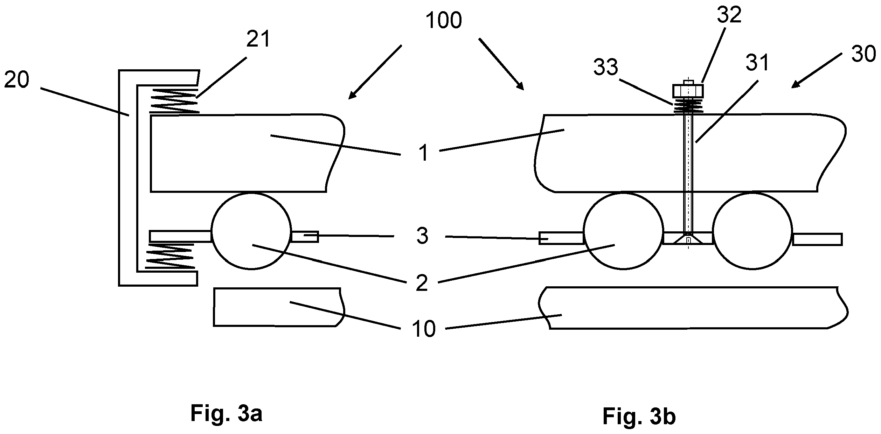

Figures 3a, 3b schematically show two examples of fasteners 20; 30 for fixing the compensation plate 3 to the pressing body 1, such that pressing spheres 2 are holded between the compensation plate 3 and the pressing body 1.

In a first example the fastener comprises a clamp 20 which reaches around the compensation plate 3 and the pressing body 1. Compensating elements, in this case springs 21, for reducing thermal stress are arranged between the compensation plate 3 and the clamp 20 as well as between the pressing body 1 and the clamp 20.

In a second example the fastener 30 comprises a bolt 31 and a nut 32. The bolt 31 reaches through the compensation plate 3 and the pressing body 1 and is fixed with the nut 32. A compensating element 33, in this case a spring, for reducing thermal stress are arranged between the pressing body 1 and the nut 32.

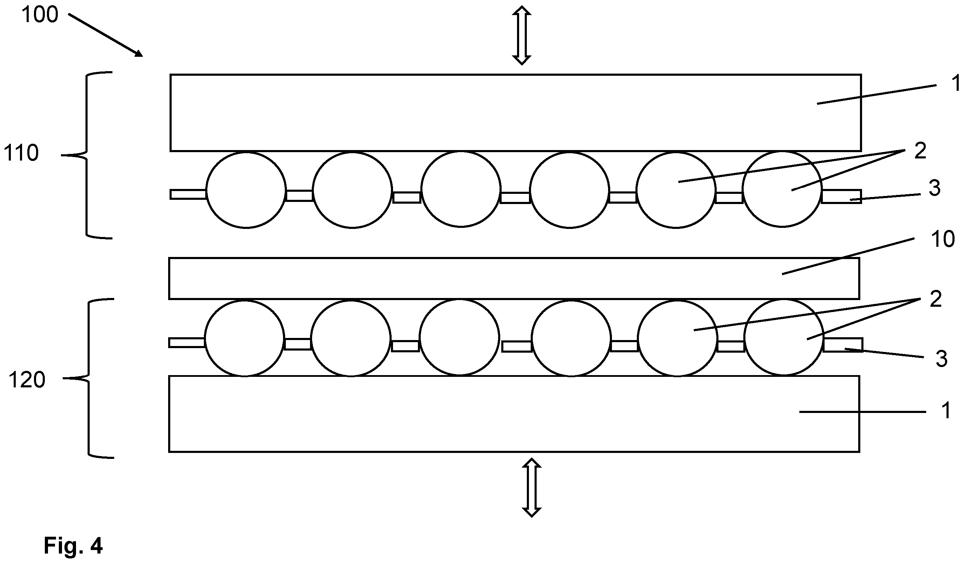

Figure 4 schematically shows a second example for a tool 100. The tool 100 comprises a first tool part 110 and a second tool part 120. Each of the first tool part 110 and the second tool part 120 comprises a pressing body 1, a compensation plate 3 and pressing spheres 2. This way both surfaces of the preform 10 may be formed.

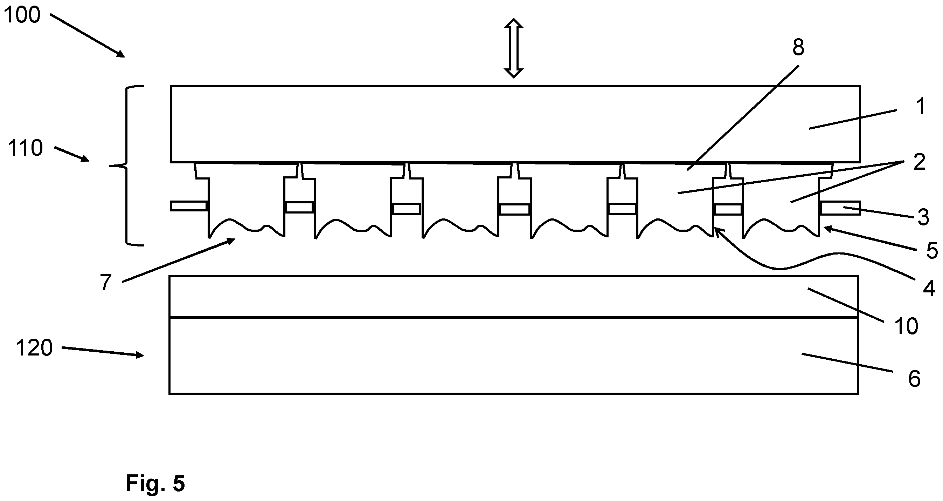

Figure 5 schematically shows a second example for a tool 100 using cylindrical pressing elements 2 producing convex free-form lenses.

The tool 100 is similar to the first example according to figure 1 and comprises a first tool part 110 with a pressing plate 1.

The first tool part tool 110 comprises a plurality of pressing elements 2, being in contact with the pressing body 1.

The first tool part 110 further comprises a compensation plate 3 comprising one opening 4 for each pressing element 2.

A portion 5 of the pressing element 2 comprises a pressing surface 7 which is disposed to extend from the compensation plate 3 and from the pressing body 1.

The pressing elements 2 further comprise base portions 8 having a diameter which is larger than the diameter of the opening 4, which prevent the pressing elements 2 from falling out of the openings 4.

The tool 100 further comprises a second tool part 110, in this case a base plate 6 wearing a preform 10.

The pressing surface 7 corresponds to a convex free form to be formed in the preform 10.

## Claims

1. Tool (100) for manufacturing a micro lens (15) by pressing a cavity in a preform (10), preferably a plate, in particular a wafer, more preferably a preform of glass,
the tool (100) comprising at least a first tool part (110) with
- a pressing body (1), preferably a pressing plate,
- at least one pressing element (2), preferably a plurality of pressing elements (2), being in contact with the pressing body (1),
- a compensation plate (3) comprising at least one opening (4), preferably one opening (4) for each pressing element (2), wherein a portion (5), of the pressing element (2) is disposed to extend from the compensation plate (3) and from the pressing body (1).

2. Tool according to claim 1, wherein the first tool part (110) comprises at least two pressing elements (2), and the compensation plate (3) comprises one opening (4) for each pressing element (2), and wherein the distance between adjacent pressing elements (2) and/or between adjacent openings is at least a quarter of the diameter of the opening (4) .

3. Tool according to claim 1, wherein the compensation plate (3) has a thermal expansion coefficient corresponding to that of the optical glass to be formed around its yielding point, preferably below 55×10⁻⁶/K, more preferably between 5×10⁻⁶/K and 25×10⁻⁶/K.

4. Tool according to at least one of the preceding claims, wherein the pressing element (2) is a pressing sphere.

5. Tool according to at least one of the preceding claims, wherein the pressing element (2) is made of glassy carbon.

6. Tool according to at least one of the preceding claims, wherein the tool comprises a fastener (20; 30) for fixing the compensation plate (3) to the pressing body (1).

7. Tool according to at least one of the preceding claims, wherein the tool (100) comprises a second tool part (120), in particular a base plate (6).

8. Lens manufacturing machine comprising a tool (100) according to at least one of the preceding claims, and an actuator for moving at least the first tool part (110), in particular relative to a preform, and preferably comprising a heating device.

9. Method for manufacturing a micro lens comprising the step of forming a cavity in a preform of glass, preferably with a tool (100) according to one of the preceding claims, wherein at least one pressing element, in particular at least one pressing sphere (2), preferably a plurality of pressing spheres (2), extending from a pressing body (1) through a respective opening (4) of a compensation plate (3) is pressed against the preform, preferably a heated preform, by the pressing body.

10. Method according to claim 8, wherein the pressing pressure is 0.1 N/cm² to 400 N/cm².

11. Method according to claim 8 or 9, wherein the pressing temperature is a temperature from 200°C to 700°C.

12. Method according to one of claims 8 to 10, wherein subsequently at least one single lens is singularized from the preform.

13. Replacement kit for a tool (100) for manufacturing a micro lens according to one of claims 1 to 7 comprising at least one pressing element, in particular at least one pressing sphere, preferably a plurality of pressing spheres (2), and/or at least one compensation plate.

14. Method for refitting a tool for manufacturing micro lenses according to one of claims 1-7, comprising the steps of
- Removing the compensation plate (3),
- Replacing at least one pressing element, in particular at least one pressing sphere (2), by a pressing element, in particular at least a pressing sphere (2), of a replacement kit,
- Preferably exchanging the compensation plate (3) by a compensation plate (3) of the replacement kit,
- Fixing the compensation plate (3).
